(19) **Europäisches Patentamt / European Patent Office / Office européen des brevets**

(11) **EP 3 565 748 B1**

(12) **FASCICULE DE BREVET EUROPEEN**

(45) Date de publication et mention de la délivrance du brevet:
**15.02.2023 Bulletin 2023/07**

(21) Numéro de dépôt: **17837974.9**

(22) Date de dépôt: **20.12.2017**

(51) Classification Internationale des Brevets (IPC):
**B60W 20/12** *(2016.01)* **B60W 50/00** *(2006.01)*
**B60W 10/06** *(2006.01)* **B60W 10/08** *(2006.01)*

(52) Classification Coopérative des Brevets (CPC):
**B60W 10/06; B60W 10/08; B60W 20/12; B60W 50/0097;** B60W 2050/0013; B60W 2050/0025; B60W 2050/0026; B60W 2050/0075; B60W 2510/0623; B60W 2510/244; B60W 2510/248; B60W 2552/05; B60W 2552/15; B60W 2552/20; B60W 2552/30;

(Cont.)

(86) Numéro de dépôt international:
**PCT/FR2017/053742**

(87) Numéro de publication internationale:
**WO 2018/127645 (12.07.2018 Gazette 2018/28)**

(54) **PROCÉDÉ D'OPTIMISATION DE LA CONSOMMATION ÉNERGÉTIQUE D'UN VÉHICULE HYBRIDE**

VERFAHREN ZUR OPTIMIERUNG DES ENERGIEVERBRAUCHS EINES HYBRIDFAHRZEUGS

METHOD FOR OPTIMISING THE ENERGY CONSUMPTION OF A HYBRID VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.01.2017 FR 1750109**

(43) Date de publication de la demande:
**13.11.2019 Bulletin 2019/46**

(73) Titulaire: **Renault s.a.s**
**92100 Boulogne Billancourt (FR)**

(72) Inventeurs:
• **OURABAH, Abdel-Djalil**
**75013 Paris (FR)**
• **GAYED, Atef**
**95670 Marly la Ville (FR)**
• **QUOST, Benjamin**
**60200 Compiègne (FR)**
• **DENOEUX, Thierry**
**60200 Compiègne (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A1- 2 385 349      EP-A2- 2 857 271**
**WO-A2-2011/019133**

(52) Classification Coopérative des Brevets (CPC):
(Cont.)
B60W 2555/60; B60W 2556/10; B60W 2556/50;
B60W 2710/244; Y02T 10/40; Y02T 10/62;
Y02T 10/70; Y02T 10/84

**Description**

DOMAINE TECHNIQUE AUQUEL SE RAPPORTE L'INVENTION

La présente invention concerne de manière générale les véhicules hybrides rechargeables.

Elle concerne plus particulièrement un procédé d'optimisation de la consommation énergétique d'un véhicule hybride comprenant un moteur à combustion interne alimenté en carburant et un moteur électrique alimenté par une batterie de traction.

L'invention trouve une application particulièrement avantageuse dans les véhicules hybrides à grande autonomie électrique, c'est-à-dire dans les véhicules susceptibles de rouler à l'aide de leur seul moteur électrique sur une distance supérieure à dix kilomètres.

ARRIERE-PLAN TECHNOLOGIQUE

Un véhicule hybride rechargeable comporte une chaîne de traction thermique conventionnelle comprenant un moteur à combustion interne et un réservoir de carburant, et une chaîne de traction électrique comprenant un moteur électrique et une batterie de traction pouvant notamment être mise en charge sur une prise de courant.

Un tel véhicule hybride est susceptible d'être tracté par sa seule chaîne de traction électrique, ou par sa seule chaîne de traction thermique, ou encore simultanément par ses deux chaînes de traction électrique et thermique ce qui correspond à un mode hybride de fonctionnement du véhicule. Le choix d'utiliser une seule ou les deux chaînes de traction simultanément est réalisé par un système de gestion d'énergie (SGE).

Du fait de la méconnaissance du futur trajet du véhicule, la stratégie actuellement implémentée pour utiliser l'une ou l'autre des chaînes de traction consiste à systématiquement commencer par décharger la batterie de traction au début du trajet jusqu'à atteindre un niveau d'énergie minimal, puis à utiliser ensuite la chaîne de traction thermique. De cette manière, lorsque le conducteur réalise des trajets courts et qu'il a régulièrement la possibilité de recharger la batterie de traction, il utilise au maximum la chaîne de traction électrique, ce qui réduit les émissions polluantes du véhicule.

Par conséquent, les systèmes de gestions d'énergie mettent en oeuvre une stratégie dite de « décharge-maintien », consistant à privilégier une décharge complète de la batterie de traction sans tenir compte de la nature et des reliefs du trajet. Ainsi, la stratégie de « décharge-maintien » implique des sollicitations de la batterie de traction qui peuvent être extrêmes et susceptibles d'altérer ses performances de façon prématurée.

En effet, la batterie de traction est prévue pour fonctionner sur une plage d'état d'énergie (SOE) définie, qui diffère en fonction des caractéristiques intrinsèques de la batterie. Par exemple, pour une batterie Lithium-ion, la plus utilisée dans les véhicules électriques et hybrides, cette plage de fonctionnement se situe généralement entre 15% et 95% de la plage d'état d'énergie. Elle est définie en faisant un compromis entre la capacité utilisable et la durée de la vie de la batterie. Il existe plusieurs facteurs qui dégradent les performances de la batterie et réduisent sa capacité, comme la température, une intensité de courant élevée pendant une durée prolongée, la surtension, la sous-tension, etc.

Dans ce but, le document FR2995859 divulgue un système de gestion d'énergie permettant de limiter le vieillissement de la batterie de traction. Pour cela, ce document propose un système de gestion d'énergie agrandissant la plage d'utilisation de la batterie en mode hybride lorsque la batterie vieillit.

Néanmoins, cette solution a pour inconvénient d'être appliquée indépendamment de la distance à parcourir par le véhicule. Ainsi, le véhicule peut être amené à fonctionner en mode hybride tout le long du trajet alors que l'autonomie de la batterie de traction lui aurait permis d'effectuer la totalité du trajet sans consommer d'essence.

Selon un autre inconvénient, la plage d'utilisation optimale est prédéfinie à l'avance et ne tient pas compte du profil de roulage sur le trajet. Le système de gestion d'énergie peut ainsi imposer des consignes de charges ou de décharge provoquant un vieillissement prématuré de la batterie de traction lorsque les conditions de roulage ne sont pas favorables à son utilisation.

Le document EP2857271A2 divulgue méthode pour sélectionner un mode optimal de fonctionnement d'une voiture hybride le long d'un trajet. Toutefois, cette méthode n'est pas optimale, car elle présente justement cet inconvénient précité d'imposer des consignes de charges ou de décharge provoquant un vieillissement prématuré de la batterie de traction lorsque les conditions de roulage ne sont pas favorables à son utilisation.

OBJET DE L'INVENTION

Afin de remédier aux inconvénients précités de l'état de la technique, notamment celui d'imposer des consignes de charges ou de décharge provoquant un vieillissement prématuré de la batterie de traction lorsque les conditions de roulage ne sont pas favorables à son utilisation, la présente invention propose un procédé d'optimisation de la consommation énergétique d'un véhicule hybride tel que défini en introduction, qui comprend des étapes suivantes :

a) acquisition, au moyen d'un système de navigation, d'un trajet à effectuer ;

b) division dudit trajet en tronçons successifs ;

c) acquisition, pour chaque tronçon, d'attributs caractérisant ledit tronçon ;

d) pour chacun desdits tronçons et compte tenu de ses attributs, sélection, parmi une pluralité de relations prédéterminées reliant des valeurs de consommation en carburant à des valeurs de consommation d'énergie électrique, d'une relation reliant la consommation en carburant du véhicule automobile hybride sur le tronçon à sa consommation d'énergie électrique ;

e) détermination d'un point optimal de préservation de l'état de santé de la batterie de traction dans chacune des relations sélectionnées, de telle sorte que l'ensemble des points optimaux minimisent le vieillissement de la batterie de traction sur l'ensemble du trajet et maximisent la décharge de la batterie de traction à l'issue dudit trajet ; et

f) élaboration d'une consigne de gestion de la consommation en carburant et en courant électrique du véhicule automobile, tout le long du trajet, en fonction des coordonnées desdits points optimaux.

Ainsi, grâce à l'invention, il est possible de déterminer à quels moments il convient d'utiliser plutôt le moteur électrique ou plutôt le moteur à combustion interne, afin de réduire au mieux le vieillissement de la batterie de traction sur le trajet emprunté par le véhicule hybride. Plus précisément, l'invention permet de privilégier l'utilisation de la batterie de traction dans une plage de fonctionnement optimale et restreinte, en tenant compte de la nature et des reliefs du trajet. Ainsi, la batterie de traction est utilisée dans des conditions plus respectueuses de son état de santé, c'est-à-dire, dans une plage de tension électrique lui permettant de délivrer une intensité de courant qui n'est ni trop élevée, ni trop faible. De façon avantageuse, l'invention permet donc d'augmenter la durée de vie de la batterie de traction, limitant ainsi les coûts d'entretien d'un véhicule automobile hybride, en évitant un remplacement précoce de la batterie de traction.

Selon l'invention, à l'étape e) la détermination d'un point optimal dans chacune des relations sélectionnées pour chaque tronçon dépend de la consommation de carburant sur l'ensemble du tronçon, pondérée par une relation de préservation de l'état de santé de la batterie de traction, et la valeur de la relation de préservation diminue, lorsque l'état d'énergie de la batterie de traction est compris dans une plage d'utilisation optimale, de sorte que la consigne de gestion privilégie l'utilisation de la batterie de traction dans sa plage d'utilisation optimale lors du trajet. Autrement dit, la relation de pondération permet de privilégier le fonctionnement du moteur électrique lorsque la batterie de traction se trouve dans sa plage d'utilisation optimale. À l'inverse, lorsque la charge de la batterie de traction est inférieure ou supérieure à cet état de charge optimal, la relation de pondération privilégie l'utilisation du moteur thermique afin de réduire les sollicitations exercées par le moteur électrique sur la batterie de traction. Néanmoins, il est à noter que la relation de pondération n'empêche pas l'utilisation de la batterie de traction en dehors de sa plage d'utilisation optimale.

D'autres caractéristiques avantageuses du procédé de préservation de l'état de santé d'une batterie de traction conforme à l'invention sont définies par les revendications dépendantes.

## DESCRIPTION DETAILLEE D'UN EXEMPLE DE REALISATION

La description qui va suivre en regard des dessins annexés, donnés à titre d'exemple non limitatif, fera bien comprendre en quoi consiste l'invention et comment elle peut être réalisée.

Sur les dessins annexés :

- la figure 1 est un tableau illustrant les valeurs d'attributs caractérisant des tronçons d'un trajet qu'un véhicule doit effectuer ;
- la figure 2 est un tableau illustrant les paramètres de courbes de référence caractérisant les tronçons du trajet à effectuer ;
- la figure 3 est un graphique illustrant la répartition de courbes de consommation spécifique acquises lors de roulages de test ;
- la figure 4 est un graphique illustrant plusieurs courbes de référence ;
- la figure 5 est un tableau associant à chaque valeur d'attribut affecté à un tronçon, une probabilité que ce tronçon soit associé à l'une ou l'autre des courbes de référence de la figure 4 ;
- la figure 6 est un graphique illustrant les corrections à apporter à une courbe de référence, compte tenu de la consommation électrique d'appareils auxiliaires du véhicule ;
- la figure 7 est un graphique illustrant les corrections à apporter à une courbe de référence, compte tenu de la pente du tronçon du trajet correspondant ;
- la figure 8 est un graphique illustrant un exemple d'une étape de calcul d'un algorithme de recherche de la trajectoire optimale par un algorithme d'optimisation ;
- la figure 9 est un graphique illustrant un exemple de forme d'une fonction d'activation selon l'invention ;
- la figure 10 est un graphique illustrant deux exemples de forme d'une fonction de pondération selon l'invention ;
- la figure 11 est un graphique illustrant un exemple de variation de l'état d'énergie d'une batterie de traction lors d'un trajet supérieur à son autonomie électrique maximale selon une méthode conforme à l'invention (courbe A) et selon une méthode de décharge-maintien (courbe B).

Classiquement, un véhicule automobile comporte un châssis qui supporte notamment un groupe motopropulseur, des éléments de carrosserie et des éléments d'habitacle.

Dans un véhicule hybride rechargeable, le groupe motopropulseur comporte une chaîne de traction thermique et une chaîne de traction électrique.

La chaîne de traction thermique comporte notamment un réservoir de carburant et un moteur à combustion interne alimenté en carburant par le réservoir.

La chaîne de traction électrique comporte quant à elle une batterie de traction et un ou plusieurs moteur(s) électrique(s) alimentés en courant électrique par la batterie de traction.

Le véhicule automobile comporte ici aussi une prise de courant permettant de mettre en charge localement la batterie de traction, par exemple sur le réseau électrique d'une habitation ou sur tout autre réseau électrique.

Le véhicule automobile comporte également des appareils auxiliaires, qui sont ici définis comme des appareils électriques alimentés en courant par la batterie de traction.

Parmi ces appareils auxiliaires, on peut citer le moteur de climatisation, les moteurs des vitres électriques, ou encore le système de géolocalisation et de navigation.

Ce système de géolocalisation et de navigation comporte classiquement une antenne permettant de recevoir des signaux relatifs à la position géolocalisée du véhicule automobile, une mémoire permettant de stocker une cartographie d'un pays ou d'une région, et un écran permettant d'illustrer la position du véhicule sur cette cartographie.

Ici, on considère le cas où cet écran est tactile pour permettre au conducteur d'y saisir des informations. Il pourrait bien entendu en être autrement.

Enfin, le système de géolocalisation et de navigation comporte un contrôleur permettant de calculer un trajet à effectuer compte tenu des informations saisies par le conducteur, de la cartographie stockée dans sa mémoire, et de la position du véhicule automobile.

Le véhicule automobile 1 comprend par ailleurs une unité électronique de commande (ou ECU pour "Electronic Control Unit"), appelée ici calculateur, permettant notamment de commander les deux chaînes de traction précitées (notamment les puissances développées par le moteur électrique et par le moteur à combustion interne).

Dans le contexte de la présente invention, ce calculateur est connecté au contrôleur du système de géolocalisation et de navigation, de manière que ces deux éléments peuvent se communiquer des informations.

Ici, ils sont connectés ensemble par le réseau principal de communication inter-organes du véhicule (typiquement par le bus CAN).

Le calculateur comprend un processeur et une unité de mémorisation (appelée ci-après mémoire).

Cette mémoire enregistre des données utilisées dans le cadre du procédé décrit ci-dessous.

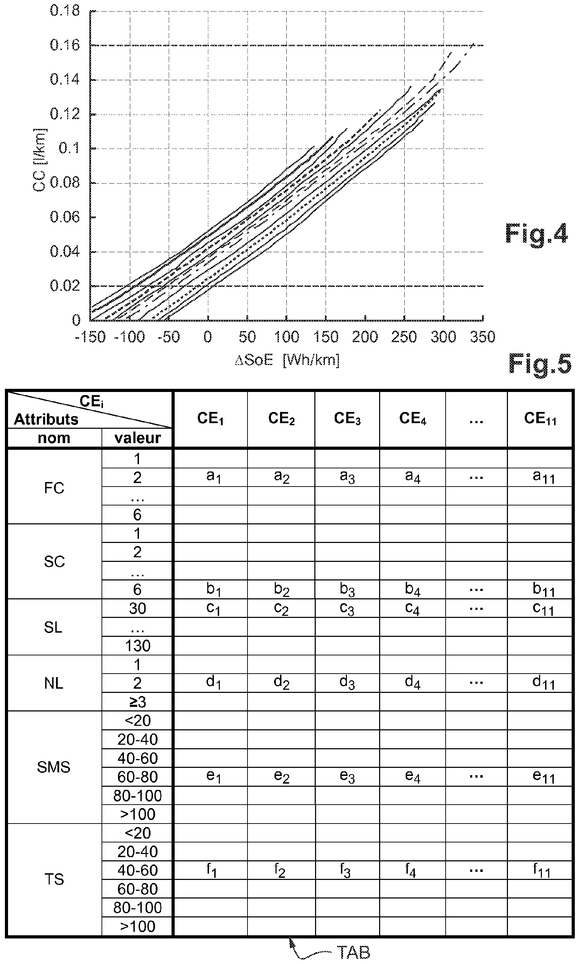

Elle enregistre notamment un tableau du type de celui illustré sur la figure 5 (qui sera détaillé dans la suite de cet exposé).

Elle enregistre également une application informatique, constituée de programmes d'ordinateur comprenant des instructions dont l'exécution par le processeur permet la mise en oeuvre par le calculateur du procédé décrit ci-après.

À titre liminaire, on définira ici plusieurs notions utilisées dans l'exposé du procédé décrit ci-après.

On pourra ainsi définir le terme « trajet » comme étant un chemin que le véhicule automobile doit emprunter depuis une station de départ pour se rendre à une station d'arrivée.

Cette station d'arrivée, but du trajet, sera considérée comme étant équipée d'une station de charge permettant de recharger la batterie de traction via la prise de courant équipant le véhicule.

Chaque trajet pourra être découpé en « segments adjacents » et en « tronçons adjacents ».

La notion de segments sera celle nativement utilisée par le contrôleur équipant le système de géolocalisation et de navigation.

En pratique, chaque segment peut par exemple correspondre à une partie du trajet qui s'étend entre deux intersections de routes. Pour définir le trajet le plus court ou le plus rapide, le contrôleur va donc déterminer par quels segments de routes le trajet doit passer.

La notion de tronçons est différente. Elle sera bien détaillée dans la suite de cet exposé. Pour simplifier, chaque tronçon du trajet correspond à une partie du trajet sur laquelle les caractéristiques de la route n'évoluent pas sensiblement. À titre d'exemple, le trajet pourrait ainsi être découpé en plusieurs tronçons sur chacun desquels la vitesse maximale autorisée est constante.

Ces tronçons sont caractérisés par des paramètres appelés ici « attributs ». Des exemples d'attributs permettant de caractériser chaque tronçon sont les suivants.

Un premier attribut sera la « catégorie de route FC ». Les contrôleurs équipant les systèmes de géolocalisation et de navigation utilisent généralement ce genre de catégories pour distinguer les différents types de routes. Ici, cette catégorie pourra prendre une valeur entière comprise entre 1 et 6 par exemple. Un attribut égal à 1 pourra correspondre à une autoroute, un attribut égal à 2 pourra correspondre à une route nationale, ...

Un second attribut sera la « pente RG » du tronçon, exprimée en degrés ou en pourcentage.

Les troisième, quatrième, cinquième et sixième attributs seront relatifs à des vitesses caractéristiques des véhicules empruntant le tronçon.

Le troisième attribut sera la « catégorie de vitesse SC » du tronçon. Les contrôleurs équipant les systèmes de géolocalisation et de navigation utilisent généralement aussi ce genre de catégories pour distinguer les différents types de routes. Ici, cette catégorie pourra prendre une valeur entière comprise entre 1 et 6 par exemple. Un attribut égal à 1 pourra correspondre à une route à grande vitesse (supérieure à 120 km/h), un attribut égal à 2 pourra correspondre à une route à vitesse élevée (comprise entre 100 et 120 km/h), ...

Le quatrième attribut sera la « vitesse maximum autorisée SL » sur le tronçon.

Le cinquième attribut sera la « vitesse moyenne SMS » constatée sur le tronçon (dont la valeur est issue d'une mesure statistique effectuée sur chaque route).

Le sixième attribut sera la « vitesse instantanée TS » constatée sur le tronçon (dont la valeur est issue d'un système d'information sur l'état du trafic en temps réel).

Le septième attribut sera la « longueur LL » du tronçon.

Le huitième attribut sera le « rayon de courbure moyen LC » du tronçon.

Le neuvième attribut sera le « nombre de voies NL » du tronçon dans le sens de circulation emprunté par le véhicule.

Dans l'exposé qui suit, on utilisera ces neuf attributs pour caractériser chaque tronçon du trajet.

En variante, on pourra caractériser chaque tronçon du trajet par un nombre restreint ou plus important d'attributs.

On définira par ailleurs l'état d'énergie SOE (de l'anglais « state of energy ») de la batterie de traction comme étant un paramètre permettant de caractériser l'énergie restante dans cette batterie de traction. En variante, on pourra utiliser un autre paramètre tel que l'état de charge SOC de la batterie (de l'anglais « state of charge ») ou tout autre paramètre du même type (résistance interne de la batterie, tension aux bornes de la batterie, ...).

La charge ou la décharge $\Delta$SOE de la batterie de traction sera alors considérée égale à la différence entre deux états d'énergie considérés à deux moments distincts.

On définit alors la « courbe de consommation spécifique » du véhicule sur un tronçon considéré comme étant une courbe qui associe à chaque valeur de consommation en carburant CC du véhicule une valeur de charge ou décharge $\Delta$SOE de la batterie de traction. En effet, sur un tronçon déterminé, il est possible d'estimer quelle sera la consommation en carburant CC du véhicule (en litre par kilomètre parcouru) et la charge ou décharge $\Delta$SOE de la batterie de traction en (Watt-heure par kilomètre). Ces deux valeurs seront liées par une courbe, puisqu'elles varieront selon que l'on utilise plutôt la chaîne de traction électrique ou plutôt la chaîne de traction thermique pour faire avancer le véhicule.

Puisqu'il existe une infinité de courbes de consommation spécifique, on définit enfin les « courbes de référence » comme étant des courbes de consommation spécifique particulières, dont on connaîtra bien les caractéristiques et qui permettront d'approximer chaque courbe de consommation spécifique. Autrement formulé, comme cela apparaîtra plus clairement dans la suite de cet exposé, on associera à chaque tronçon de trajet non pas une courbe de consommation spécifique, mais plutôt une courbe de référence (celle qui constituera la meilleure approximation de la courbe de consommation spécifique).

Le procédé, qui est mis en oeuvre conjointement par le contrôleur du système de géolocalisation et de navigation et par le calculateur du véhicule, est un procédé de calcul d'une consigne de gestion de la consommation en carburant et en courant électrique du véhicule.

Ce procédé consiste plus précisément à déterminer comment, sur un trajet prédéfini, il faudra utiliser la chaîne de traction électrique et la chaîne de traction thermique de manière à préserver au mieux l'état de santé de la batterie de traction.

Selon une caractéristique particulièrement avantageuse de l'invention, le procédé comprend les six étapes principales suivantes :

- acquisition d'un trajet à effectuer,
- division dudit trajet en tronçons $T_i$ adjacents successifs,
- acquisition, pour chaque tronçon $T_i$, d'attributs FC, SC, SL, TS, RG, LL NL, SMS caractérisant ce tronçon $T_i$,
- détermination, pour chacun des tronçons $T_i$, compte tenu des attributs FC, SC, SL, TS, RG, LL NL, SMS de ce tronçon $T_i$, d'une relation (appelée ici courbe de référence $CE_j$) reliant chaque valeur de consommation en carburant CC du véhicule automobile hybride sur le tronçon à une valeur de charge ou décharge $\Delta$SOE de la batterie de traction,
- détermination d'un point optimal $P_i$ de chaque courbe de référence $CE_j$ permettant de préserver au mieux l'état de santé SOH de la batterie de traction et d'obtenir une décharge complète de la batterie de traction à l'issue dudit trajet, et
- élaboration d'une consigne de gestion énergétique en fonction des coordonnées desdits points optimaux $P_i$.

On rappellera ici que pendant sa durée de vie, une batterie présente des performances qui tendent à se détériorer progressivement à cause de changements chimiques irréversibles qui ont lieu à l'usage. On quantifie cette détérioration à l'aide d'un indicateur appelé « état de santé SOH », qui définit la capacité de la batterie à fournir des prestations spécifiques, par rapport aux prestations qu'elle était capable de fournir à l'état neuf. De manière bien connue, cet état de santé SOH présente une corrélation très forte avec la résistance interne de la batterie et avec la tension à ses bornes (à l'état chargé).

Ces six étapes successives sont détaillées dans la suite de cet exposé.

La première étape consiste à acquérir le trajet que le véhicule automobile doit effectuer.

Cette étape pourra être opérée par le contrôleur embarqué dans le système de géolocalisation et de navigation.

Cette étape est alors mise en oeuvre de manière classique.

Ainsi, lorsque le conducteur utilise l'écran tactile du système de géolocalisation et de navigation pour définir une station d'arrivée, le contrôleur de ce système calcule le trajet à effectuer, en fonction notamment des paramètres de routage sélectionnés par le conducteur (trajet le plus rapide, trajet le plus court...).

À ce stade, on pourra noter que le procédé devra être réinitialisé dès lors que le véhicule emprunte un trajet différent de celui défini par le système de géolocalisation et de navigation.

En variante, cette première étape pourra être réalisée autrement.

Ainsi, il sera possible de s'affranchir de la saisie par le conducteur de la station d'arrivée sur l'écran tactile. Pour cela, le contrôleur pourra détecter les habitudes du conducteur et en déduire automatiquement la station d'arrivée.

Par exemple, lorsque le conducteur emprunte chaque jour de la semaine le même trajet pour aller travailler, ce trajet peut être automatiquement acquis sans que le conducteur n'ait à saisir une quelconque information sur l'écran tactile du système de géolocalisation et de navigation.

À l'issue de cette première étape, le contrôleur embarqué dans le système de géolocalisation et de navigation connaît le trajet du véhicule, qui est alors composé d'une pluralité de segments adjacents, dont on rappelle qu'ils s'étendent chacun entre deux intersections de route.

La seconde étape consiste à diviser le trajet en tronçons $T_i$.

L'intérêt de re-diviser le trajet non plus en segments, mais en tronçons est tout d'abord de réduire le nombre de subdivisions du trajet. En effet, il arrive souvent que les attributs de deux segments successifs soient identiques. Si on traitait séparément ces deux segments successifs, on multiplierait inutilement la durée des calculs. En rassemblant les segments identiques au sein d'un même tronçon, on va pouvoir réduire la durée des calculs.

Un autre intérêt est que les caractéristiques de la route sur un même segment peuvent varier sensiblement (une partie du segment peut correspondre à une route de pente nulle et une autre partie de ce segment peut correspondre à une route de pente importante). Ici, on souhaite diviser le trajet en tronçons sur chacun desquels les caractéristiques de la route restent homogènes.

Chaque tronçon $T_i$ sera ici défini comme étant une portion du trajet qui comporte au moins un attribut invariable sur toute sa longueur.

Cet attribut pourra être constitué par la pente RG et/ou par la catégorie de vitesse SC et/ou par la catégorie de route FC.

Ici, cette étape sera mise en oeuvre par le contrôleur embarqué dans le système de géolocalisation et de navigation. Il découpera à cet effet le trajet en tronçons $T_i$ de longueurs maximums sur lesquels les trois attributs précités (RG, SC, FC) sont constants.

À l'issue de cette seconde étape, le contrôleur a ainsi défini N tronçons.

La troisième étape consiste à acquérir les attributs de chaque tronçon $T_i$.

Lorsque l'un des attributs sera variable sur le tronçon considéré, c'est la valeur moyenne de cet attribut sur l'ensemble du tronçon qui sera considérée.

En pratique, cette troisième étape est réalisée de la manière suivante.

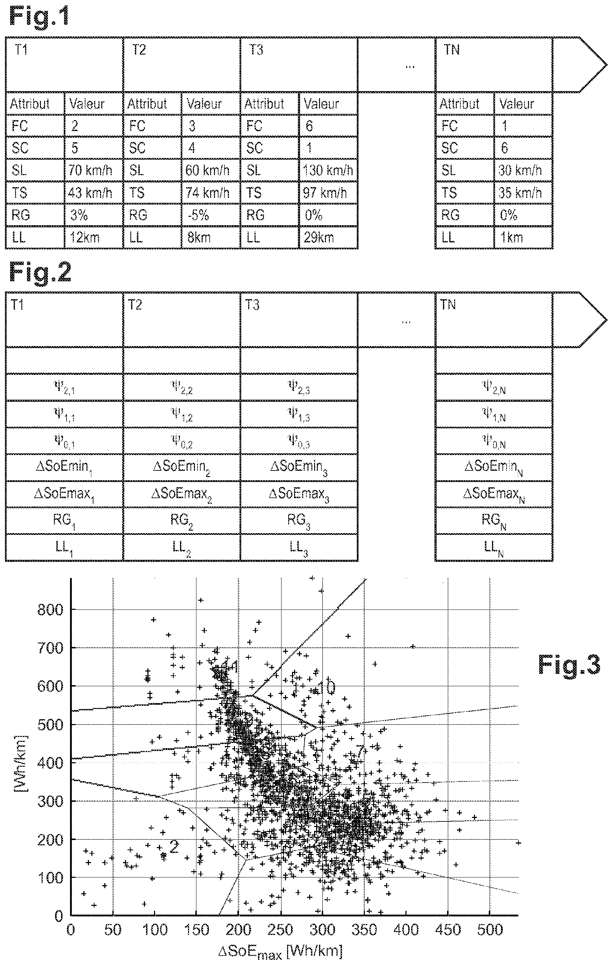

Tout d'abord, le contrôleur embarqué dans le système de géolocalisation et de navigation informe le calculateur qu'un nouveau trajet a été calculé. Le calculateur demande alors l'envoi des attributs de chaque tronçon, sous la forme par exemple d'un tableau du type de celui illustré sur la figure 1.

Le contrôleur acquiert alors les attributs de chaque tronçon de la manière suivante.

Il en calcule une partie, notamment la longueur LL du tronçon.

Il en lit une autre partie dans la mémoire du système de géolocalisation et de navigation, notamment la catégorie de route FC, la pente RG, la catégorie de vitesse SC, la vitesse maximum autorisée SL, la vitesse moyenne SMS, le rayon de courbure moyen LC, et le nombre de voies NL.

Il se fait communiquer une dernière partie de ces attributs par un autre appareil, notamment la vitesse instantanée TS que lui communique le système d'information sur l'état du trafic en temps réel.

Le contrôleur transmet ensuite l'ensemble de ces informations au calculateur principal du véhicule, via le bus CAN.

L'avantage d'utiliser le contrôleur embarqué dans le système de géolocalisation et de navigation plutôt que le calculateur principal du véhicule pour opérer les trois premières étapes est de réduire le nombre d'informations à transmettre au calculateur par le bus CAN. En effet, en fusionnant les segments adjacents du trajet qui présentent les mêmes attributs, le volume des données transmises est réduit, ce qui accélère la transmission des données par le bus CAN.

Dès réception des informations, le calculateur met en oeuvre les étapes suivantes.

La quatrième étape consiste alors, pour chacun des tronçons $T_i$, à déterminer parmi les courbes de référence $CE_j$ enregistrées dans la mémoire du calculateur celle qui permettra d'estimer au mieux la consommation énergétique (en carburant et en courant) du véhicule sur le tronçon $T_i$ considéré.

Cette étape permet alors de passer d'une caractérisation de chaque tronçon par des attributs, à une caractérisation par un coût énergétique.

Au cours de cette quatrième étape du présent exemple de réalisation, le calculateur va utiliser le tableau TAB illustré sur la figure 5, qui est enregistré dans sa mémoire.

Comme le montre cette figure 5, ce tableau TAB présente des lignes qui correspondent chacune à une valeur (ou à un intervalle de valeurs) d'un attribut. Il présente des colonnes correspondant chacune à l'une des courbes de référence $CE_j$. Dans l'exemple illustré, on considérera que la mémoire du calculateur stocke M courbes de référence $CE_j$, avec M ici égal à onze.

Sur la figure 5, les cases du tableau TAB sont laissées vides puisque les valeurs qu'elles comporteront dépendront des caractéristiques du véhicule.

En pratique, ce tableau TAB sera mémorisé dans la mémoire du calculateur avec des valeurs dans chacune de ces cases.

Ces valeurs seront des valeurs de probabilité (comprises entre 0 et 1) correspondant à la probabilité que chaque valeur d'attribut corresponde à l'une ou l'autre des courbes de référence $CE_j$.

À titre d'exemple, si la catégorie de route FC d'un tronçon $T_i$ présente une valeur égale à 2, on pourra lire dans le tableau que la probabilité que ce tronçon soit bien caractérisé en termes de coût énergétique par la courbe de référence CE1 sera égale à $a_1$, que la probabilité que ce tronçon soit bien caractérisé en termes de coût énergétique par la courbe de référence CE2 sera égale à $a_2$, ...

On notera que les valeurs des pentes RG et de longueur LL n'ont pas été, à dessein, utilisées dans ce tableau TAB.

À ce stade, le calculateur peut alors relever chaque valeur de probabilité correspondant à la valeur de chaque attribut du tronçon $T_i$ considéré.

Sur l'exemple illustré, où on considère que l'attribut FC est égal à 2, que l'attribut SC est égal à 6, que l'attribut SL est égal à 30, que l'attribut NL est égal à 2, que l'attribut SMS est compris entre 60 et 80 et que l'attribut TS est compris entre 40 et 60, le calculateur relève les valeurs notées $a_1$ à $a_{11}$, $b_1$ à $b_{11}$, $c_1$ à $c_{11}$, $d_1$ à $d_{11}$, $e_1$ à $e_{11}$, et $f_1$ à $f_{11}$.

Le calculateur fait ensuite la somme des probabilités que le tronçon $T_i$ considéré soit bien caractérisé en termes de coût énergétique par chacune des onze courbes de référence $CE_j$.

Sur l'exemple illustré, le calculateur somme à cet effet les valeurs notées $a_1$ à $f_1$, puis $a_2$ à $f_2$, ...

Enfin, le calculateur détermine laquelle des onze sommes donne le résultat le plus élevé.

Alors, il considère que la courbe de référence $CE_j$ à laquelle est associée cette somme de probabilité élevée est celle qui caractérise le mieux le tronçon $T_i$ en terme de coût énergétique.

Le calculateur peut alors acquérir dans sa mémoire les valeurs des paramètres caractérisant cette courbe de référence $CE_j$.

À ce stade de l'exposé, on peut s'intéresser plus précisément à la manière selon laquelle ces courbes de référence sont obtenues et modélisées.

Pour chaque modèle de véhicule (ou pour chaque modèle de moteurs, ou pour chaque ensemble de modèles de voitures, ou pour chaque ensemble de modèles de moteurs), il est nécessaire de réaliser un grand nombre de roulages tests (ou de simulation de roulages tests) sur différents tronçons de route géolocalisés.

Ces roulages tests permettent de déterminer la consommation en carburant et en courant électrique du véhicule sur différents tronçons dont les attributs sont connus. Pour cela, on fait évoluer le véhicule plusieurs fois sur chaque tronçon en augmentant à chaque fois la part de la traction développée par le moteur électrique.

Il est alors possible de générer une courbe de consommation spécifique CCS pour chaque tronçon. Ces courbes de consommation spécifique sont du type des courbes illustrées sur la figure 4.

On peut observer sur chacune de ces courbes que plus on utilise de l'énergie électrique (soit un $\Delta SOE < 0$) plus la consommation de carburant baisse jusqu'à atteindre 0 lors d'un roulage en utilisant exclusivement la chaîne de traction électrique. À l'inverse plus on cherche à recharger la batterie via le moteur thermique ($\Delta SOE > 0$) plus la consommation de carburant augmente. Enfin, on rappellera que chaque courbe de consommation spécifique CCS décrit la consommation énergétique moyenne du véhicule pour la situation d'un roulage sur route horizontale (pente nulle), sans consommation électrique des appareils auxiliaires.

Ces roulages tests permettent de trouver autant de courbes de consommation spécifique CCS qu'il y a de tronçons testés.

Chaque courbe de consommation spécifique CCS peut être modélisée par un polynôme de second ordre pour lequel les variations de charge et décharge $\Delta SOE$ de la batterie de traction sont bornées entre un seuil minimal $\Delta SOE_{min}$ et un seuil maximal $\Delta SOE_{max}$, ce que l'on peut écrire :

$$\begin{cases} m_{FC} = \Psi_2.\Delta SOE^2 + \Psi_1.\Delta SOE + \Psi_0 \\ \Delta SOE \in [\Delta SOEmin \quad \Delta SOEmax] \end{cases} \qquad [1]$$

avec $\psi_0$, $\psi_1$, $\psi_2$ les coefficients du polynôme.

Comme le montrent les courbes de la figure 4, pour simplifier cette modélisation, on peut faire l'estimation que les deux coefficients $\psi_1$, $\psi_2$ sont identiques d'une courbe à l'autre. On peut également observer que le seuil minimal $\Delta SOE_{min}$ dépend des trois coefficients du polynôme. Ainsi, seuls varient le coefficient $\psi_0$ et le seuil maximal $\Delta SOE_{max}$. Ce sont donc ces deux valeurs qui permettent de caractériser chaque courbe de consommation spécifique CCS.

La figure 3 illustre par un exemple des points dont les coordonnées correspondent à ces deux variables $\psi_0$ et $\Delta SOE_{max}$. Elle montre la répartition des courbes de consommation spécifique CCS obtenues lors des roulages tests effectués. Ici, on considère que ces points sont répartis dans onze zones distinctes. Chaque zone est alors définie par son barycentre.

Ainsi, comme cela a été exposé supra, dans le procédé, on n'acquiert pas la courbe de consommation spécifique qui correspondrait exactement au tronçon considéré, mais on considère plutôt une des onze courbes de référence dont les variables $\psi_0$ et $\Delta SOE_{max}$ correspondent au barycentre de l'une de ces onze zones.

À ce stade du procédé, chaque tronçon $T_i$ est alors défini comme le montre la figure 2 par les paramètres $\psi_0$, $\psi_1$, $\psi_2$, $\Delta SOE_{min}$, $\Delta SOE_{max}$ précités, ainsi que par la longueur $LL_i$ de chaque tronçon $T_i$ et par sa pente $RG_i$.

Comme cela a été expliqué supra, la courbe énergétique $CE_i$ sélectionnée ne tient compte ni de la pente du tronçon $T_i$, ni de la consommation en courant électrique des appareils auxiliaires (moteur de climatisation, ...).

Afin de tenir compte de la pente de chaque tronçon $T_i$, il est prévu une étape de correction de chaque courbe de référence $CE_i$ en fonction de la pente $RG_i$.

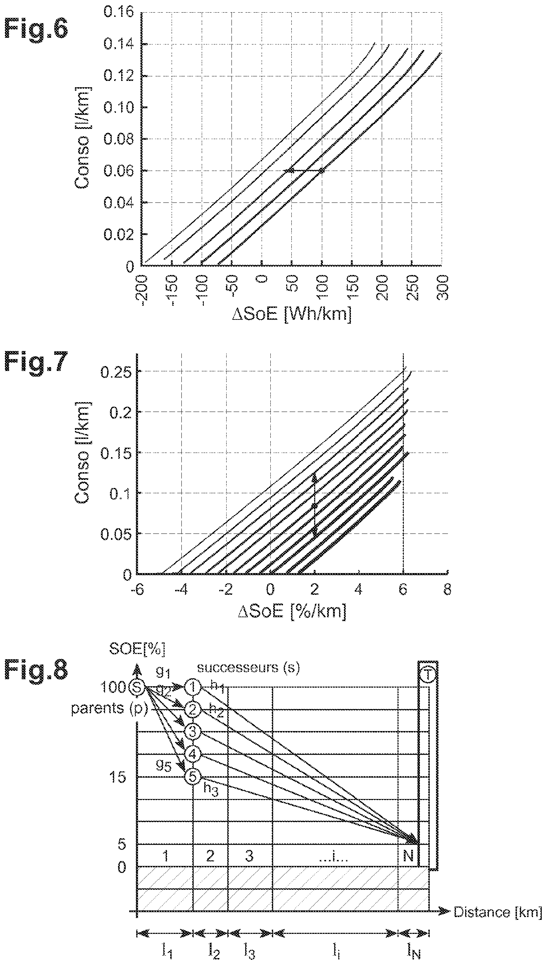

Comme le montre bien la figure 7, cette étape de correction consiste simplement à décaler la courbe de référence $CE_i$ associée au tronçon $T_i$ vers le haut ou vers le bas (c'est-à-dire à charge ou décharge $\Delta SOE$ constante), d'une valeur fonction de la pente $RG_i$.

On comprend en effet que lorsque le tronçon de route considéré monte, la consommation en carburant va être plus élevée que celle prévue initialement. A contrario, lorsque le tronçon de route considéré descend, la consommation en carburant va être moins élevée que celle prévue initialement.

En outre, lors des phases de freinage, il sera possible de récupérer davantage d'énergie électrique en descente qu'en montée.

En pratique, l'étape de correction consistera à corriger le paramètre $\psi_0$ selon la formule suivante :

$$\Psi_0' = \Psi_0 + K.RGi \qquad [2]$$

avec K un coefficient dans la valeur dépend du modèle de véhicule considéré et de ses caractéristiques (à titre d'exemple, on pourra ici considérer $K = 0.01327$ $l.km^{-1}$).

Afin de tenir compte de la consommation en courant électrique des appareils auxiliaires, il est prévu une seconde étape de correction de chaque courbe de référence $CE_i$ en fonction de la puissance électrique $P_{aux}$ consommée par ces appareils auxiliaires.

On notera ici que la valeur de puissance électrique $P_{aux}$ considérée est la valeur qui peut être mesurée au moment des calculs. Dans ce procédé, on fait donc l'hypothèse que la puissance électrique consommée restera sensiblement constante lors du trajet. Si jamais le calculateur détectait une grosse variation de cette puissance électrique sur une durée importante (par exemple parce que la climatisation est mise en route), il pourrait être programmé pour recommencer le procédé à cette étape afin de tenir compte de la nouvelle valeur de puissance électrique $P_{aux}$.

Plus précisément, le procédé pourrait être réinitialisé à cette seconde étape de correction si l'écart entre la puissance électrique considérée dans les calculs et celle mesurée devait rester supérieur à un seuil (par exemple de 10%) sur une durée supérieure à un seuil (par exemple 5 minutes).

Comme le montre bien la figure 6, la seconde étape de correction consiste simplement à décaler la courbe de référence $CE_i$ associée au tronçon $T_i$ vers la gauche (c'est-à-dire à consommation en carburant constante), d'une valeur fonction de la puissance électrique $P_{aux}$.

On comprend en effet que lorsque les appareils électriques sont utilisés, la charge de la batterie va être plus lente que prévue et la décharge de cette batterie va être plus rapide que prévue.

En pratique, l'étape de correction consistera à décaler la courbe de référence $CE_j$ d'une valeur $E_{AUX}$ calculée à partir de la formule suivante :

$$E_{AUX} = \frac{P_{AUX}}{\bar{v}} \qquad [3]$$

où $\bar{v}$ représente la vitesse moyenne sur le tronçon (en km/h). Cette valeur peut être fournie directement par le système de géolocalisation et de navigation, en estimant qu'elle sera égale à la valeur de la vitesse du trafic ou à la vitesse moyenne statistique ou à la vitesse maximale autorisée.

L'invention vise à proposer un système de gestion d'énergie (SGE) capable de limiter le vieillissement de la batterie de traction, notamment lorsque l'énergie totale nécessaire pour atteindre la destination finale du véhicule hybride est bien supérieure à l'énergie électrique contenue dans la batterie de traction. Dans ce cas, une grande partie de l'énergie nécessaire pour atteindre la destination finale est de nature thermique et la batterie de traction permet d'économiser une faible partie de cette énergie. Au vu de ce faible gain d'économie, il est donc préférable de préserver l'état de santé (SOH) de la batterie de traction, en favorisant son utilisation dans des conditions optimales d'utilisation.

En effet, pour une même tension d'alimentation délivrée par la batterie de traction, la valeur du courant électrique qu'elle génère varie en fonction de son état de charge (SOC). Ainsi, la valeur du courant généré par la batterie de traction peut être très faible ou bien très élevée, lorsque sa charge est respectivement élevée ou faible. Dans ces cas précis, les composants de la batterie sont soumis à des dynamiques trop lentes ou trop rapides, provoquant une usure prématurée de ses composants. Pour prévenir de ce phénomène de vieillissement prématuré, les constructeurs de batteries préconisent des plages de valeurs optimales d'utilisation de la batterie, entre un seuil minimal ($SOE_{min'}$, correspondant par exemple à 60% de charge) et une seuil maximal ($SOE_{max'}$, correspondant par exemple à 80% de charge) de charge de la batterie de traction, comprises entre une valeur d'état charge minimale ($SOE_{min}$, correspondant par exemple à 10% de charge) et une valeur d'état de charge maximale ($SOE_{max}$, correspondant par exemple à 90% de charge) lors de son utilisation.

L'invention vise précisément à favoriser le fonctionnement de la batterie de traction dans sa plage de valeurs optimales d'utilisation et le plus longtemps possible, lors du trajet du véhicule hybride, tout en prévoyant sa décharge complète à la destination finale du véhicule. Par le terme « décharge complète », on entend le fait que la charge de la batterie est inférieure à une valeur de charge de repos. A titre d'exemple, cette valeur de charge de repos peut être inférieure à 10% ou inférieure à 5% de sa capacité de la charge totale de la batterie de traction. De préférence, la valeur de charge de repos correspond aux préconisations du constructeur de la batterie concernant ses conditions optimales de stockage à vide.

L'invention propose donc l'utilisation d'un algorithme d'optimisation du système de gestion d'énergie du véhicule hybride, favorisant une utilisation de la batterie de traction dans sa plage de valeurs optimales d'utilisation [$SOE_{min'}$, $SOE_{max'}$] pour chaque tronçon parcouru par le véhicule, et une décharge complète de la batterie de traction à la fin de son trajet.

L'algorithme d'optimisation est mis en oeuvre par le calculateur selon une cinquième étape du procédé décrit ci-dessus, dont on rappelle qu'elle consiste à déterminer un point optimal $P_i$ de chaque courbe de référence $CE_j$ sélectionnée pour chaque tronçon du trajet.

Plus précisément, l'algorithme d'optimisation vise tout d'abord à minimiser, au début de chaque tronçon à parcourir, la valeur d'une fonction de coût énergétique $f$, de façon que la consommation énergétique soit la plus faible possible sur l'ensemble du trajet.

Cette fonction de coût énergétique $f$ correspond à la somme de l'énergie consommée par le véhicule pour atteindre un nouveau tronçon i et une estimation de l'énergie à dépenser pour atteindre la destination finale correspondant à un tronçon N.

Plus précisément, la fonction de coût énergétique $f$ est définie de la façon suivante :

$$f(d_i, SOE_i) = g(d_i, SOE_i) + h(d_{(i,N)}, SOE_{(i,N)}) \qquad [4]$$

avec :

- la fonction $g(d_i, SOE_i)$ représente le coût énergétique cumulé $SOE_i$ pour parcourir la distance $d_i$ afin d'atteindre le noeud i à partir d'un noeud initial (correspondant au début du trajet), et en passant par tous les noeuds précédents ; et
- la fonction $h(d_{(i,N)}, SOE_{(i,N)})$ représente une estimation du coût énergétique restant $SOE_{(i,N)}$ pour parcourir la distance restante $d_{(i,N)}$ pour attendre le noeud final N (correspondant à la destination finale) à partir du noeud i.

Le calcul de valeurs de la fonction $f$ au début de chaque tronçon i implique donc le calcul de la valeur des fonctions $g(d_i, SOE_i)$ et $h(d_{(i,N)}, SOE_{(i,N)})$ définies de la façon suivante :

$$g(d_i, SOE_i) = g(d_{i-1}, SOE_{i-1}) + M_{FC}^{i-1}(\Delta SOE_{(i-1,i)}) \times l_{i-1} \qquad [5]$$

et

$$h(d_{(i,N)}, SOE_{(i,N)}) = \sum_{j=i}^{N} M_{FC}^{j}(\Delta SOE_{(i,j)}) \times l_j \qquad [6]$$

avec :

- $l_i$ la longueur du tronçon i ;
- $\Delta SOE_{(i-1,i)}$ la variation de l'état de charge de la batterie de traction sur le tronçon précédent le noeud i ;
- $M_{FC}^{i}$ la consommation en carburant du véhicule hybride sur le tronçon précédent le noeud i.

Afin de faciliter la compréhension de l'invention par le lecteur, la figure 8 montre un exemple de calculs de valeurs de la fonction coût énergétique $f$ par le calculateur. Plus précisément, sur la figure 8 le trajet du véhicule hybride est divisé en N tronçons jusqu'à sa destination finale, symbolisée par la lettre T. Chaque tronçon se caractérise par une distance propre $l_i$ reportée sur l'axe des abscisses. L'axe des ordonnées indique l'état de charge (SOE) de la batterie de traction le long du trajet. Selon le présent exemple, le véhicule hybride aborde un deuxième tronçon (i=2) de son parcours. Le calculateur effectue alors le calcul de la valeur de la fonction du coût énergétique $f$ en faisant varier la valeur de la fonction $h$, plus précisément en fonction varier la valeur de la consommation en carburant nécessaire pour parvenir à la destination finale du trajet, selon la variation de l'état de charge de la batterie de traction. Selon le présent exemple, cinq valeurs de la fonction $h$ sont calculées, permettant d'obtenir cinq valeurs de la fonction $f$ reportées sur la figure 8 au niveau d'un axe délimitant le premier et le deuxième tronçon. Bien entendu, le calculateur peut effectuer un nombre de calculs de valeurs de la fonction $f$ plus ou moins important.

Pour rappel, l'invention vise à limiter le vieillissement de la batterie de traction en particulier lorsque l'énergie nécessaire pour atteindre la destination finale du véhicule est bien supérieure à l'énergie électrique disponible dans la batterie de traction. Pour cela, l'invention propose de pondérer les valeurs de consommation de carburant utilisées dans les équations [5] et [6], par une valeur de préservation ($r_{pre}$) de l'état de santé (SOH) de la batterie de traction.

L'objectif de cette pondération est globalement de faire en sortie que le choix de chaque noeud du trajet se fasse non seulement en fonction de la consommation énergétique du véhicule sur l'ensemble du trajet, mais qu'il se fasse également de telle sorte que, lorsque le trajet est long et que l'apport de la chaîne de traction électrique sera négligeable, les sollicitations qui sont exercées sur la batterie et qui sont de nature à la faire vieillir, restent restreintes.

Les valeurs de consommation de carburant sont plus précisément pondérées de la façon suivante :

$$M_{FC}^{i}(\Delta SOE_{(x,y)}, \overline{SOE_{(x,y)}}, R_x) = r_{pre}(\Delta SOE_{(x,y)}, \overline{SOE_{(x,y)}}, R_x) \times m_{FC}^{i}(\Delta SOE_{(x,y)})$$

$$[7]$$

Avec :

- $\Delta SOE_{(x,y)}$ représentant la variation de l'état de charge de la batterie de traction par kilomètres effectués, dans le tronçon délimité par les noeuds x et y ;
- $SOE_{(x,y)}$ représentant la valeur moyenne de l'état de charge de la batterie de traction entre les noeuds x et y ;
- $R_x$ représentant la distance entre le noeud $x$ et le noeud final $N$ ; et
- $m_{FC}^{i}$ représentant la fonction telle que définie à l'équation [1] ci-dessus pour le noeud i.

La relation de préservation ($r_{pre}$) dépend des paramètres suivants :

$$r_{pre}(\Delta SOE_{(x,y)}, \overline{SOE_{(x,y)}}, R_x) = 1 - f_{act}(R_x) \times f_{pond}(\overline{SOE_{(x,y)}} - SOE_{rec}) \times p_{max}$$

$$[8]$$

Avec :

- $f_{act}(R_x)$ représentant une fonction d'activation avec $R_x$ la distance à parcourir par le véhicule hybride pour atteindre sa destination finale ;
- $f_{pon}(\overline{SOE_{(x,y)}} - SOE_{rec})$ représentant une fonction de pondération ;
- $SOE_{rec}$ représentant la valeur médiane de la plage de valeurs optimales d'utilisation de la batterie de traction recommandée, dans avec : $SOE_{rec} = \frac{SOE_{max'}+SOE_{min'}}{2}$ ;

- $p_{max}$ représentant une valeur de pondération maximale.

En particulier, la plage de valeurs optimales d'utilisation de la batterie de traction dépend de la nature de la batterie et des recommandations de son constructeur. À titre d'exemple, cette plage de valeurs optimales d'utilisation de la batterie de traction peut être comprise entre 60% et 80% de sa charge électrique maximale. Bien entendu, ces valeurs peuvent varier en fonction des caractéristiques intrinsèques de la batterie utilisée.

La fonction d'activation $f_{act}$ dépend de la distance $R_T$ que doit parcourir le véhicule automobile avant d'atteindre sa destination finale. La fonction d'activation vise à permettre d'appliquer une pondération significative (c'est-à-dire un poids important) à la valeur de consommation de carburant mfc lorsque le véhicule se trouve à une distance encore éloignée de sa destination finale, puis à réduire ensuite ce poids afin de permettre une décharge complète de la batterie une fois arrivée à sa destination.

On peut pour cela définir les seuils de distance suivants :

- $R_{min}$ représentant la distance minimale en dessous de laquelle aucune pondération n'est appliquée ($f_{fac}(R_x)=0$ avec $R_T<R_{min}$), à titre d'exemple la valeur de $R_{min}$ peut correspondre à deux fois l'autonomie électrique maximale du véhicule en kilomètres ($l_{AER}$) ;
- $R_{max}$ représentant la distance au-delà de laquelle 100% de la pondération est appliquée ($f_{fac}(R_x)=1$ avec $R_T>R_{max}$), à titre d'exemple la valeur de $R_{max}$ peut correspondre à six fois l'autonomie électrique maximale du véhicule en kilomètres (AER).

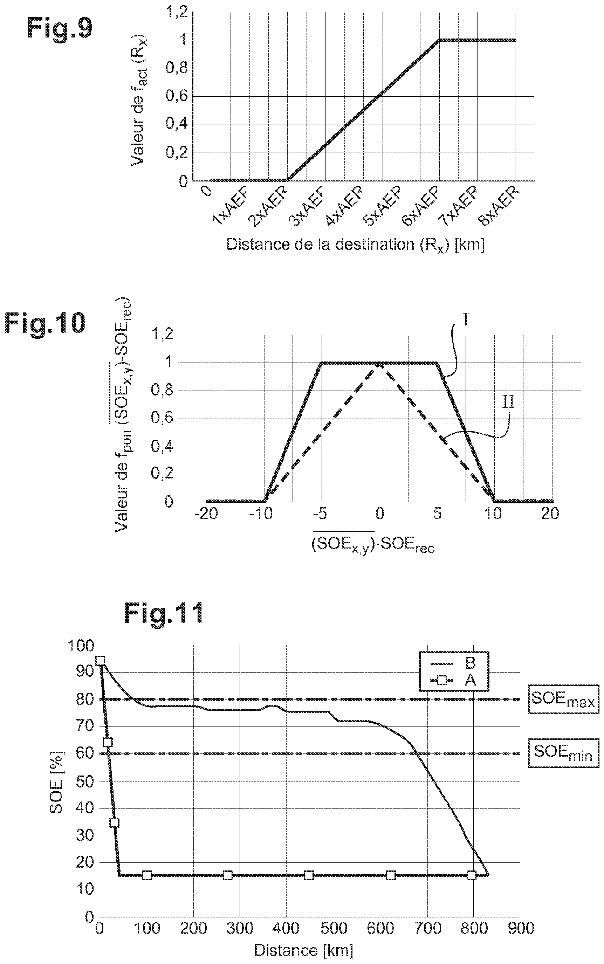

Il est à noter que la fonction de pondération peut varier de façon linéaire entre les valeurs $R_{min}$ et $R_{max}$ comme représenté à la figure 9. Bien entendu, d'autres profils de variations sont possibles.

La fonction de pondération $f_{pon}$ dépend d'une part de la valeur moyenne de l'état de charge de la batterie de traction entre les noeuds x et y ; et d'autre part de la valeur $SOE_{rec}$ représentant la valeur médiane de l'intervalle de SOE recommandé dans la plage d'utilisation optimale de la batterie de traction. Cette fonction de pondération vise ainsi à faire en sorte que l'état d'énergie SOE reste autant que possible dans la plage d'utilisation optimale (tant que le véhicule est éloigné de l'arrivée du trajet). À titre d'exemple, la fonction de pondération peut être définie de sorte à reproduire l'un ou l'autre des tracés (I) et (II) représentés sur la figure 10. Bien entendu, d'autres profils de tracé sont possibles.

La valeur de pondération maximale $p_{max}$ définit le degré maximal de pondération des noeuds avec un état d'énergie SOE dans la plage d'utilisation optimale. À titre d'exemple, la valeur de pondération maximale peut être égale à 0,1 afin de favoriser 10% des noeuds dans la plage d'utilisation optimale.

Ainsi, l'utilisation de la relation de pondération décrite ci-dessus permet de modifier les valeurs calculées de la fonction de coût énergétique $f$, de sorte que l'algorithme d'optimisation privilégie alors les valeurs correspondant à une consommation en carburant permettant de décharger ou de recharger la batterie de traction, de manière à ce que son état de charge soit compris dans sa plage de valeurs optimales d'utilisation, le plus longtemps possible durant le trajet, et d'assurer la décharge complète de la batterie de traction en fin de trajet. Ainsi, selon le présent exemple, la valeur de la fonction $f$ est minimisée par la relation de pondération de sorte que ses valeurs calculées soient les plus faibles au milieu de l'intervalle de la plage d'utilisation optimale de la batterie de traction, correspondant par exemple à la valeur 3 sur la figure 8.

En fonction de la valeur minimale de la fonction $f$ déterminée par l'algorithme d'optimisation, le calculateur en déduit un point optimal ($P_i$) sur la courbe de référence $CE_i$ associée au tronçon $T_i$, permettant de favoriser une utilisation de la batterie de traction dans sa plage de valeurs optimales d'utilisation.

Selon une sixième étape du procédé décrit ci-dessus, une fois le chemin optimal trouvé (passant par les points optimaux des courbes de référence $CE_j$), le calculateur élabore une consigne de gestion énergétique en fonction des coordonnées des points optimaux $P_i$. Cette consigne de gestion énergétique est alors utilisée au cours du trajet par le calculateur afin de faire du suivi de trajectoire.

Plusieurs procédés permettent de réaliser un tel suivi. Un exemple est notamment bien illustré dans la demande de brevet FR2988674 déposée par la demanderesse, ou encore dans les documents WO2013150206 et WO2014001707.

La figure 11 montre un exemple d'une consigne de gestion d'énergie selon l'invention, pour un trajet d'environ 800km sur autoroute, avec l'hypothèse d'un véhicule hybride doté d'une autonomie électrique maximale $l_{AER}$ de 30km.

La courbe A illustre une consigne de gestion d'énergie selon une stratégie de décharge-maintien, connue de l'état de la technique, par rapport à une consigne de gestion d'énergie selon l'invention représentée par la courbe B. Selon cet exemple, l'invention permet d'accroître de plus de 600% la distance durant laquelle la batterie de traction fonctionne dans sa plage d'utilisation optimale, cette distance passant de 10km à 600km. De plus, l'invention permet d'assurer la décharge complète de la batterie de traction en fin de trajet, ce qui maximise l'utilisation du potentiel électrique du véhicule et permet de réduire la consommation de carburant.

En particulier, au lieu de stocker les paramètres $\psi_0$, $\psi_1$, $\psi_2$, $\Delta SOE_{min}$, $\Delta SOE_{max}$ des courbes de référence, on pourra prévoir que le calculateur stocke des points caractérisant globalement la forme de chaque courbe de référence. On parlera alors de cartographie.

Selon une autre variante de l'invention, dans le cas où le système de géolocalisation et de navigation ne connaît pas la valeur d'un attribut d'un tronçon du trajet, on pourra prévoir :

- soit que le calcul des sommes de probabilités ne tienne pas compte des valeurs des probabilités affectées à cet attribut,
- soit que le calcul remplace la valeur inconnue par une valeur prédéterminée.

En conclusion, l'invention propose un nouveau procédé de calcul de consignes de gestion de la consommation en carburant et en courant électrique d'un véhicule automobile hybride, réduisant le vieillissement de la batterie de traction pendant les trajets supérieurs à son autonomie électrique maximale, en s'assurant que la batterie de traction soit déchargée lorsque le véhicule hybride arrive à sa destination finale. Autrement dit, l'invention propose un algorithme d'optimisation comprenant une fonction de pondération pénalisant les calculs de consommation de carburant lorsque la batterie ne fonctionne pas dans son état de fonctionnement optimale, tout en s'assurant que l'état d'énergie de la batterie atteint un seuil minimal conseillé lorsque le véhicule arrive à destination.

**Revendications**

1. Procédé d'optimisation de la consommation énergétique d'un véhicule hybride comprenant un moteur à combustion interne alimenté en carburant et un moteur électrique alimenté par une batterie de traction, **caractérisé en ce qu'**il met en oeuvre les étapes suivantes :

   a) acquisition, au moyen d'un système de navigation, d'un trajet à effectuer ;
   b) division dudit trajet en tronçons ($T_i$) successifs ;
   c) acquisition, pour chaque tronçon ($T_i$), d'attributs (FC, SC, SL, TS, RG, LL, NL, SMS) caractérisant ledit tronçon ($T_i$) ;
   d) pour chacun desdits tronçons ($T_i$) et compte tenu de ses attributs (FC, SC, SL, TS, RG, LL, NL, SMS), sélection, parmi une pluralité de relations prédéterminées ($CE_j$) reliant des valeurs de consommation en carburant (CC) à des valeurs de consommation d'énergie électrique ($\Delta SOE$), d'une relation ($CE_j$) reliant la consommation en carburant (CC) du véhicule automobile hybride sur le tronçon ($T_i$) à sa consommation d'énergie électrique ($\Delta SOE$) ;
   e) détermination d'un point optimal ($P_i$) de préservation de l'état de santé (SOH) de la batterie de traction dans chacune des relations ($CE_j$) sélectionnées, de telle sorte que l'ensemble des points optimaux ($P_i$) minimisent le vieillissement de la batterie de traction sur l'ensemble du trajet et maximisent la décharge de la batterie de traction à l'issue dudit trajet ; et
   f) élaboration d'une consigne de gestion de la consommation en carburant et en courant électrique du véhicule automobile, tout le long du trajet, en fonction des coordonnées desdits points optimaux ($P_i$),

   le procédé étant **caractérisé en ce que**, à l'étape e), la détermination du point optimal ($P_i$) dans chacune des relations ($CE_j$) sélectionnées pour chaque tronçon ($T_i$) dépend de la consommation de carburant sur l'ensemble du tronçon ($T_i$), pondérée par une relation de préservation ($r_{pre}$) de l'état de santé (SOH) de la batterie de traction, la valeur de la relation de préservation ($r_{pre}$) diminuant lorsque l'état d'énergie (SOE) de la batterie de traction est compris dans une plage d'utilisation optimale [$SOE_{min'}$ ; $SOE_{max'}$].

2. Procédé d'optimisation de la consommation énergétique d'un véhicule hybride selon la revendication 1, dans lequel la valeur de la relation de préservation ($r_{pre}$) diminue, lorsque la distance à parcourir pour arriver à destination augmente.

3. Procédé d'optimisation de la consommation énergétique d'un véhicule hybride selon l'une des revendications 1 ou 2, dans lequel la relation de préservation ($r_{pre}$) dépend d'un produit entre une fonction d'activation ($f_{act}$) et une fonction de pondération ($f_{pond}$), la valeur de la fonction d'activation ($f_{act}$) étant minimale lorsque la distance restant à parcourir est inférieure à un premier seuil qui est déterminé en fonction de l'autonomie électrique maximale (AER) du véhicule, de façon à minimiser l'influence de la relation de préservation ($r_{pre}$) dans la détermination du point optimal ($P_i$).

**4.** Procédé d'optimisation de la consommation énergétique d'un véhicule hybride selon l'une des revendication 1 à 3, dans lequel la relation de préservation ($r_{pre}$) dépend d'un produit entre une fonction d'activation ($f_{act}$) et une fonction de pondération ($f_{pond}$), la valeur de la fonction de pondération ($f_{pond}$) étant minimale lorsque l'état d'énergie (SOE) de la batterie de traction est en dehors de sa plage d'utilisation optimale [$SOE_{min'}$; $SOE_{max'}$], de façon à minimiser l'influence de la relation de préservation ($r_{pre}$) dans la détermination du point optimal.

**5.** Procédé d'optimisation de la consommation énergétique d'un véhicule hybride selon la revendication 3 ou 4, dans lequel la valeur de la fonction d'activation ($f_{act}$) diminue lorsque la distance à parcourir pour arriver à destination diminue.

**6.** Procédé d'optimisation de la consommation énergétique d'un véhicule hybride selon l'une des revendications 3 à 5, dans lequel la valeur de la fonction de pondération ($f_{pond}$) est maximale lorsque l'état d'énergie (SOE) de la batterie de traction est au centre de sa plage d'utilisation optimale [$SOE_{min'}$; $SOE_{max'}$].

**7.** Procédé d'optimisation de la consommation énergétique d'un véhicule hybride selon l'une des revendications 3 à 6, dans lequel la fonction de pondération ($f_{pond}$) a une valeur maximale sur plus de 10% de la plage d'utilisation optimale [$SOE_{min'}$; $SOE_{max'}$] de la batterie à traction.

**8.** Procédé d'optimisation de la consommation énergétique d'un véhicule hybride selon l'une des revendications 1 à 7, dans lequel la plage d'utilisation optimale [$SOE_{min'}$; $SOE_{max'}$] de la batterie à traction est comprise entre 60% et 80%.

**Patentansprüche**

**1.** Verfahren zur Optimierung des Energieverbrauchs eines Hybridfahrzeugs, das einen mit Kraftstoff gespeisten Verbrennungsmotor und einen von einer Antriebsbatterie gespeisten Elektromotor enthält, **dadurch gekennzeichnet, dass** es die folgenden Schritte durchführt:

a) Erfassung eines zurückzulegenden Wegs mittels eines Navigationssystems,;
b) Unterteilung des Wegs in aufeinanderfolgende Abschnitte ($T_i$);
c) Erfassung von den Abschnitt ($T_i$) kennzeichnenden Attributen (FC, SC, SL, TS, RG, LL, NL, SMS) für jeden Abschnitt ($T_i$);
d) für jeden der Abschnitte ($T_i$) und unter Berücksichtigung seiner Attribute (FC, SC, SL, TS, RG, LL, NL, SMS), Auswahl unter einer Vielzahl vorbestimmter Beziehungen ($CE_j$), die Kraftstoffverbrauchswerte (CC) mit Verbrauchswerten elektrischer Energie (ΔSOE) verbinden, einer Beziehung ($CE_j$), die den Kraftstoffverbrauch (CC) des Hybridkraftfahrzeugs im Abschnitt ($T_i$) mit seinem Verbrauch elektrischer Energie (ASOE) verbindet;
e) Bestimmung eines optimalen Punkts ($P_i$) der Bewahrung des Gesundheitszustands (SOH) der Antriebsbatterie in jeder der ausgewählten Beziehungen ($CE_j$), so dass die Gesamtheit der optimalen Punkte ($P_i$) die Alterung der Antriebsbatterie auf dem gesamten Weg minimiert und die Entladung der Antriebsbatterie am Ende des Wegs maximiert; und
f) Erarbeitung eines Verwaltungssollwerts des Kraftstoff- und Stromverbrauchs des Kraftfahrzeugs entlang des ganzen Wegs, abhängig von den Koordinaten der optimalen Punkte ($P_i$),

wobei das Verfahren **dadurch gekennzeichnet ist, dass** im Schritt e) die Bestimmung des optimalen Punkts ($P_i$) in jeder der für jeden Abschnitt ($T_i$) gewählten Beziehungen ($CE_j$) vom Kraftstoffverbrauch im gesamten Abschnitt ($T_i$) abhängt, gewichtet durch eine Bewahrungsbeziehung ($r_{pre}$) des Gesundheitszustands (SOH) der Antriebsbatterie,
wobei der Wert der Bewahrungsbeziehung ($r_{pre}$) abnimmt, wenn der Energiezustand (SOE) der Antriebsbatterie in einem optimalen Nutzungsbereich [$SOE_{min}$; $SOE_{max}$] liegt.

**2.** Optimierungsverfahren des Energieverbrauchs eines Hybridfahrzeugs nach Anspruch 1, wobei der Wert der Be-

wahrungsbeziehung ($r_{pre}$) abnimmt, wenn die zum Erreichen des Ziels zu durchfahrende Strecke zunimmt.

3.  Optimierungsverfahren des Energieverbrauchs eines Hybridfahrzeugs nach einem der Ansprüche 1 oder 2, wobei die Bewahrungsbeziehung ($r_{pre}$) von einem Produkt zwischen einer Aktivierungsfunktion ($f_{act}$) und einer Gewichtungsfunktion ($f_{pond}$) abhängt, wobei der Wert der Aktivierungsfunktion ($f_{act}$) minimal ist, wenn die verbleibende zu durchfahrende Strecke unter einer ersten Schwelle liegt, die abhängig von der maximalen elektrischen Autonomie (AER) des Fahrzeugs bestimmt wird, um den Einfluss der Bewahrungsbeziehung ($r_{pre}$) bei der Bestimmung des optimalen Punkts ($P_i$) zu minimieren.

4.  Optimierungsverfahren des Energieverbrauchs eines Hybridfahrzeugs nach einem der Ansprüche 1 bis 3, wobei die Bewahrungsbeziehung ($r_{pre}$) von einem Produkt zwischen einer Aktivierungsfunktion ($f_{act}$) und einer Gewichtungsfunktion ($f_{pond}$) abhängt, wobei der Wert der Gewichtungsfunktion ($f_{pond}$) minimal ist, wenn der Energiezustand (SOE) der Antriebsbatterie außerhalb ihres optimalen Nutzungsbereichs [$SOE_{min}$; $SOE_{max}$] liegt, um den Einfluss der Bewahrungsbeziehung ($r_{pre}$) bei der Bestimmung des optimalen Punkts zu minimieren.

5.  Optimierungsverfahren des Energieverbrauchs eines Hybridfahrzeugs nach Anspruch 3 oder 4, wobei der Wert der Aktivierungsfunktion ($f_{act}$) abnimmt, wenn die zum Erreichen des Ziels zu durchfahrende Strecke abnimmt.

6.  Optimierungsverfahren des Energieverbrauchs eines Hybridfahrzeugs nach einem der Ansprüche 3 bis 5, wobei der Wert der Gewichtungsfunktion ($f_{pond}$) maximal ist, wenn der Energiezustand (SOE) der Antriebsbatterie in der Mitte ihres optimalen Nutzungsbereichs [$SOE_{min}$; $SOE_{max}$] ist.

7.  Optimierungsverfahren des Energieverbrauchs eines Hybridfahrzeugs nach einem der Ansprüche 3 bis 6, wobei die Gewichtungsfunktion ($f_{pond}$) über mehr als 10% des optimalen Nutzungsbereichs [$SOE_{min}$; $SOE_{max}$] der Antriebsbatterie einen maximalen Wert hat.

8.  Optimierungsverfahren des Energieverbrauchs eines Hybridfahrzeugs nach einem der Ansprüche 1 bis 7, wobei der optimale Nutzungsbereich [$SOE_{min}$; $SOE_{max}$] der Antriebsbatterie zwischen 60% und 80% liegt.

**Claims**

1.  Method for optimizing the energy consumption of a hybrid vehicle comprising an internal combustion engine supplied with fuel and an electric engine supplied by a traction battery, **characterized in that** it implements the following steps:

    a) acquiring, by way of a navigation system, a route to be taken;
    b) dividing said route into successive sections ($T_i$);
    c) acquiring, for each section ($T_i$), attributes (FC, SC, SL, TS, RG, LL, NL, SMS) characterizing said section ($T_i$);
    d) for each of said sections ($T_i$), and taking into account its attributes (FC, SC, SL, TS, RG, LL, NL, SMS), selecting, from among a plurality of predetermined relationships ($CE_j$) linking fuel consumption values (CC) to electrical energy consumption values ($\Delta SOE$), a relationship ($CE_j$) linking the fuel consumption (CC) of the hybrid motor vehicle over the section ($T_i$) to its electrical energy consumption ($\Delta SOE$);
    e) determining an optimum point ($P_i$) for preserving the state of health (SOH) of the traction battery in each of the selected relationships ($CE_j$), such that all of the optimum points ($P_i$) minimize the ageing of the traction battery over the entire route and maximize the discharge of the traction battery at the end of said route; and
    f) formulating a setpoint for managing the fuel consumption and electric current consumption of the motor vehicle, along the entire route, as a function of the coordinates of said optimum points ($P_i$),

    the method being **characterized in that**, in step e), the determination of the optimum point ($P_i$) in each of the relationships ($CE_j$) selected for each section ($T_i$) depends on the fuel consumption over the entire section ($T_i$), weighted by a preservation relationship ($r_{pre}$) for preserving the state of health (SOH) of the traction battery, the value of the preservation relationship ($r_{pre}$) decreasing when the state of energy (SOE) of the traction battery is within an optimum usage range [$SOE_{min}$; $SOE_{max}$] .

2.  Method for optimizing the energy consumption of a hybrid vehicle according to Claim 1, wherein the value of the preservation relationship ($r_{pre}$) decreases when the distance to be covered to arrive at a destination increases.

3.  Method for optimizing the energy consumption of a hybrid vehicle according to either of Claims 1 and 2, wherein

the preservation relationship ($r_{pre}$) depends on a product of an activation function ($f_{act}$) and a weighting function ($f_{pond}$), the value of the activation function ($f_{act}$) being at a minimum when the remaining distance to be covered is less than a first threshold that is determined on the basis of the maximum electrical autonomy (AER) of the vehicle, so as to minimize the influence of the preservation relationship ($r_{pre}$) in the determination of the optimum point ($P_i$).

4. Method for optimizing the energy consumption of a hybrid vehicle according to one of Claims 1 to 3, wherein the preservation relationship ($r_{pre}$) depends on a product of an activation function ($f_{act}$) and a weighting function ($f_{pond}$), the value of the weighting function ($f_{pond}$) being at a minimum when the state of energy (SOE) of the traction battery is outside of its optimum usage range [$SOE_{min}$; $SOE_{max}$], so as to minimize the influence of the preservation relationship ($r_{pre}$) in the determination of the optimum point.

5. Method for optimizing the energy consumption of a hybrid vehicle according to Claim 3 or 4, wherein the value of the activation function ($f_{act}$) decreases when the distance to be covered to arrive at a destination decreases.

6. Method for optimizing the energy consumption of a hybrid vehicle according to one of Claims 3 to 5, wherein the value of the weighting function ($f_{pond}$) is at a maximum when the state of energy (SOE) of the traction battery is in the centre of its optimum usage range [$SOE_{min}$; $SOE_{max}$].

7. Method for optimizing the energy consumption of a hybrid vehicle according to one of Claims 3 to 6, wherein the weighting function ($f_{pond}$) has a maximum value over more than 10% of the optimum usage range [$SOE_{min}$; $SOE_{max}$] of the traction battery.

8. Method for optimizing the energy consumption of a hybrid vehicle according to one of Claims 1 to 7, wherein the optimum usage range [$SOE_{min}$; $SOE_{max}$] of the traction battery is between 60% and 80%.

## Fig.1

| T1 | | T2 | | T3 | | | ... | TN | |
|----|----|----|----|----|----|----|----|----|----|
| Attribut | Valeur | Attribut | Valeur | Attribut | Valeur | | | Attribut | Valeur |
| FC | 2 | FC | 3 | FC | 6 | | | FC | 1 |
| SC | 5 | SC | 4 | SC | 1 | | | SC | 6 |
| SL | 70 km/h | SL | 60 km/h | SL | 130 km/h | | | SL | 30 km/h |
| TS | 43 km/h | TS | 74 km/h | TS | 97 km/h | | | TS | 35 km/h |
| RG | 3% | RG | -5% | RG | 0% | | | RG | 0% |
| LL | 12km | LL | 8km | LL | 29km | | | LL | 1km |

## Fig.2

| T1 | T2 | T3 | ... | TN |
|----|----|----|----|----|
| | | | | |
| $\psi_{2,1}$ | $\psi_{2,2}$ | $\psi_{2,3}$ | | $\psi_{2,N}$ |
| $\psi_{1,1}$ | $\psi_{1,2}$ | $\psi_{1,3}$ | | $\psi_{1,N}$ |
| $\psi_{0,1}$ | $\psi_{0,2}$ | $\psi_{0,3}$ | | $\psi_{0,N}$ |
| $\Delta SoEmin_1$ | $\Delta SoEmin_2$ | $\Delta SoEmin_3$ | | $\Delta SoEmin_N$ |
| $\Delta SoEmax_1$ | $\Delta SoEmax_2$ | $\Delta SoEmax_3$ | | $\Delta SoEmax_N$ |
| $RG_1$ | $RG_2$ | $RG_3$ | | $RG_N$ |
| $LL_1$ | $LL_2$ | $LL_3$ | | $LL_N$ |

Fig.3

**Fig.6**

**Fig.7**

**Fig.8**

Fig.4

Fig.5

| CE_i / Attributs | | CE_1 | CE_2 | CE_3 | CE_4 | ... | CE_11 |
|---|---|---|---|---|---|---|---|
| nom | valeur | | | | | | |
| FC | 1 | | | | | | |
| | 2 | $a_1$ | $a_2$ | $a_3$ | $a_4$ | ... | $a_{11}$ |
| | ... | | | | | | |
| | 6 | | | | | | |
| SC | 1 | | | | | | |
| | 2 | | | | | | |
| | ... | | | | | | |
| | 6 | $b_1$ | $b_2$ | $b_3$ | $b_4$ | ... | $b_{11}$ |
| SL | 30 | $c_1$ | $c_2$ | $c_3$ | $c_4$ | ... | $c_{11}$ |
| | ... | | | | | | |
| | 130 | | | | | | |
| NL | 1 | | | | | | |
| | 2 | $d_1$ | $d_2$ | $d_3$ | $d_4$ | ... | $d_{11}$ |
| | ≥3 | | | | | | |
| SMS | <20 | | | | | | |
| | 20-40 | | | | | | |
| | 40-60 | | | | | | |
| | 60-80 | $e_1$ | $e_2$ | $e_3$ | $e_4$ | ... | $e_{11}$ |
| | 80-100 | | | | | | |
| | >100 | | | | | | |
| TS | <20 | | | | | | |
| | 20-40 | | | | | | |
| | 40-60 | $f_1$ | $f_2$ | $f_3$ | $f_4$ | ... | $f_{11}$ |
| | 60-80 | | | | | | |
| | 80-100 | | | | | | |
| | >100 | | | | | | |

TAB

19

## Fig.9

Distance de la destination ($R_x$) [km]

## Fig.10

## Fig.11

Distance [km]

**EP 3 565 748 B1**

## RÉFÉRENCES CITÉES DANS LA DESCRIPTION

**Documents brevets cités dans la description**

- FR 2995859
- EP 2857271 A2
- FR 2988674
- WO 2013150206 A
- WO 2014001707 A